Europäisches Patentamt

European Patent Office

Office européen des brevets

(19)

(11) Publication number: **0 445 737 A1**

# EUROPEAN PATENT APPLICATION

(12)

(21) Application number: **91103320.7**

(22) Date of filing: **05.03.91**

(51) Int. Cl.⁵: **F16D 13/68**

(30) Priority: **07.03.90 JP 23048/90**

(43) Date of publication of application:
**11.09.91 Bulletin 91/37**

(84) Designated Contracting States:
**DE FR GB**

(71) Applicant: **AISIN SEIKI KABUSHIKI KAISHA**
**1, Asahi-machi 2-Chome**
**Kariya City Aichi Pref.(JP)**

Applicant: **TOYOTA JIDOSHA KABUSHIKI**
**KAISHA**
**1, Toyota-cho Toyota-shi**
**Aichi-ken(JP)**

(72) Inventor: **Sugiura, Shizuo, c/o Aisin Seiki**
**Kabushiki Kaisha**
**1, Asahi-machi 2-chome**
**Kariya City, Aichi pref.(JP)**
Inventor: **Kusano, Naofumi, Toyota Jidosha**
**Kabushiki Kaisha**
**1, Toyota-cho**
**Toyota-shi, Aichi-ken(JP)**

(74) Representative: **Tiedtke, Harro, Dipl.-Ing. et al**
**Patentanwaltsbüro Tiedtke-Bühling-Kinne-**
**Grupe-Pellmann-Grams Bavariaring 4**
**Postfach 20 24 03**
**W-8000 München 2(DE)**

(54) **Clutch disk.**

(57) Disclosed is a clutch disk comprising a clutch hub (2) including a flange (3) formed on an outer periphery thereof, the flange having a plurality of openings (4), a sub-plate (6) including a plurality of openings (8) disposed at positions corresponding to the openings (4) of the flange (3) of the clutch hub (2) and defined by a peripheral portion, a disk plate (7) including a plurality of openings (9) disposed at positions corresponding to the openings (4) of the flange (3) of the clutch hub (2) and defined by a peripheral portion, a plurality of dampers (11) disposed in the openings (4,8,9) of the flange (3) of the clutch hub (2), the sub-plate (6) and the disk plate (7), the dampers (11) including an elastic member (14) and sheet members (15) disposed on both ends of the elastic member (14) and having a cup shape, and a facing (13) connected to the disk plate (7) by way of a cushion plate (12). Since the clutch disk includes the dampers (11), the sheet members (15) of the dampers (11) are brought into contact with the inner surfaces of the peripheral portions of the sub-plate (6) and the disk plate (7) in a fully increased area, or the surface pressures per a unit contacting area exerted thereon by the sheet members are reduced remarkably. Hence, it is possible to sharply reduce wears developed on the inner surfaces of the peripheral portions of the sub-plate (6) and the disk plate (7) and to improve the durability of the peripheral portions thereof.

Figure 2

## BACKGROUND OF THE INVENTION

### 1. Field of the Invention

The present invention relates to a clutch disk for engaging and disengaging a power transmission of a vehicle, a ship, or the like.

### 2. Description of the Prior Art

Japanese Examined Patent Publication No. 9846/1983 describes a well-known arrangement of a conventional clutch disk. The conventional clutch disk comprises:

a clutch hub including a flange formed on an outer periphery thereof, the flange having a plurality of openings and a plurality of cut-offs working as stoppers, and the clutch hub engaging with a rotary shaft;

a sub-plate including a plurality of openings disposed at positions corresponding to the openings of the flange of the clutch hub and defined by a peripheral portion protruding in an axial direction in an arc shape in a cross section, and the sub-plate disposed over one surface of the flange of the clutch hub;

a disk plate including a plurality of openings disposed at positions corresponding to the openings of the flange of the clutch hub and defined by a peripheral portion protruding in an axial direction in an arc shape in a cross section, the disk plate disposed over another surface of the flange of the clutch hub and connected to the sub-plate by way of a plurality of stopper pins;

a plurality of dampers for elastically connecting the clutch hub, the sub-plate and the disk plate, said dampers disposed in the openings of the flange of the clutch hub, the openings of the sub-plate and the openings of the disk plate; and

a facing connected to an outer peripheral portion of the disk plate by way of a cushion plate.

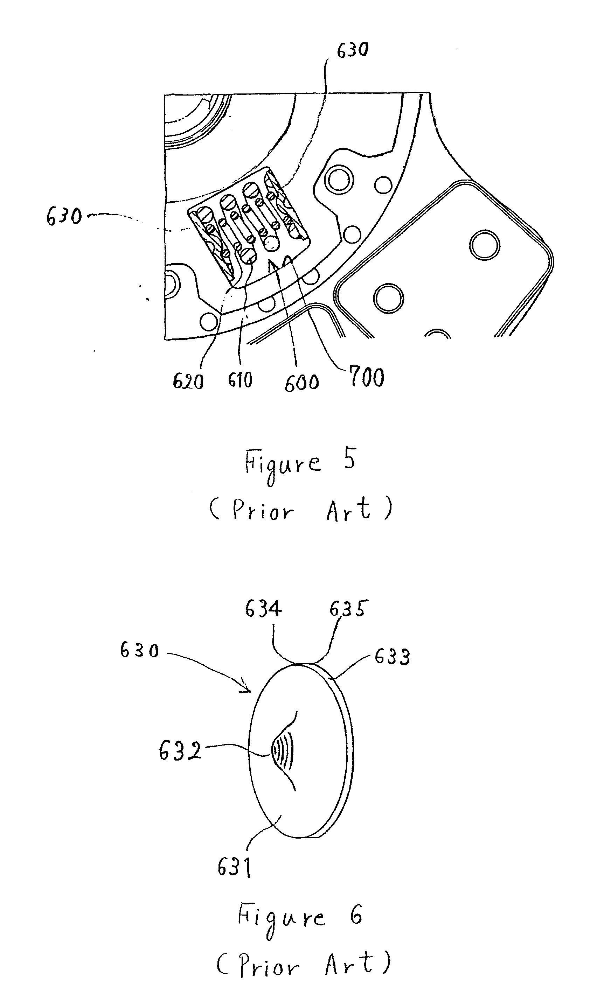

As illustrated in Figure 5, in the prior art clutch disk, the damper 600 includes two (2) torsion springs 610 and 620 and two (2) spring receivers 630 disposed on both ends of the torsion springs 610 and 620 so as to hold the damper 600 in the openings 700 of the flange of the clutch hub, the sub-plate and the disk plate.

As illustrated in Figure 6, the spring receiver 630, constituting the damper 600 of the prior art clutch disk, includes a flat disk portion 631 and a convexed portion 632 disposed at a central portion thereof. Accordingly, when the clutch hub, the sub-plate and the disk plate rotate relatively, depending on the directions of the relative rotation, the end surface 633 (i.e., the peripheral portion of the flat disk portion 631) of the either one of the spring receivers 630 is pressed against and moved on the inner surfaces of the peripheral portions of the openings 700 of the sub-plate and the disk plate by a centrifugal force.

Since the end surface 633 of the spring receivers 630 is pressed against and moved on the inner surfaces of the peripheral portions of the openings 700 of the sub-plate and the disk plate in a very small area thereof, and since edges 634 and 635 of the end surface 633 of the spring receivers 630 are brought into contact therewith, very high surface pressures per a unit contacting area have been exerted on the inner surfaces of the peripheral portions of the openings 700 of the sub-plate and the disk plate, and heavy wears have been developed thereon. Thus, there is a fear for eventually resulting in the breakages of the peripheral portions of the openings 700 of the sub-plate and the disk plate.

In addition, since the spring receivers 630 are manufactured by machining or punching out a metal blank plate, the end surface 633 of the spring receivers 630 is a machined surface. Consequently, the end surface 633 thereof has a surface roughness which adversely affects to further develop heavy wears on the inner surfaces of the peripheral portions of the openings 700 of the sub-plate and the disk plate.

## SUMMARY OF THE INVENTION

The present invention has been developed in view of the above-described problems of the conventional clutch disk. It is therefore an object of the present invention to increase contacting areas of sheet members of dampers of a clutch disk with respect to inner surfaces of peripheral portions of openings of a sub-plate and a disk plate, or to decrease surface pressures per a unit contacting area exerted thereon, so as to solve the problem of the conventional clutch disk.

The above and other object of the present invention can be achieved by a clutch disk according to the present invention. The clutch disk comprises:

a clutch hub including a flange formed on an outer periphery thereof, the flange having a plurality of openings and a plurality of cut-offs working as stoppers, and the clutch hub engaging with a rotary shaft;

a sub-plate including a plurality of openings disposed at positions corresponding to the openings of the flange of the clutch hub and defined by a peripheral portion protruding in an axial direction in an arc shape in a cross section, and the sub-plate disposed over one surface of the flange of the clutch hub;

a disk plate including a plurality of openings disposed at positions corresponding to the openings of the flange of the clutch hub and defined by a peripheral portion protruding in an axial direction in an arc shape in a cross section, the disk plate disposed over another surface of the flange of the clutch hub and connected to the sub-plate by way of a plurality of stopper pins;

a plurality of dampers for elastically connecting the clutch hub, the sub-plate and the disk plate, the dampers disposed in the openings of the flange of the clutch hub, the openings of the sub-plate and the openings of the disk plate, the dampers including an elastic member and sheet members disposed on both ends of the elastic member, said sheet members having a cup shape so as to contact with inner surfaces of the peripheral portions of the openings of the sub-plate and inner surfaces of the peripheral portions of the openings of the disk plate in a surface-contact manner, thereby holding the dampers in the openings; and

a facing connected to an outer peripheral portion of the disk plate by way of a cushion plate.

Further, it is preferred to form the sheet members of the dampers so as to give them a letter "E" shape in a cross section. The letter "E" shape has a bottom portion, side wall portions and a protrusion portion disposed at a central portion thereof. If such is the case, the elastic member can be firmly held between the sheet members. Furthermore, it is preferred to form the sheet members by drawing a metal blank plate with dies. If such is the case, a low roughness can be given to a formed side wall portion of the sheet members.

Since the clutch disk according to the present invention includes the dampers having the above-described arrangement, it is possible to bring the sheet members into contact with the inner surfaces of the peripheral portions of the openings of the sub-plate and the disk plate in a fully increased area, namely it is possible to reduce surface pressures per a unit contacting area exerted thereon by the sheet members. This is because the side wall of the cup-shaped sheet members having a large area is brought into contact therewith. Accordingly, it is possible to reduce the surface pressures per a unit contacting area exerted on the inner surfaces of the peripheral portions of the openings of the sub-plate and the disk plate to remarkably lower magnitudes. The surface pressures have resulted from the centrifugal force and have acted thereon by way of the sheet members when the clutch hub, the sub-plate and the disk plate rotate relatively. In addition, in the case that the sheet members are formed in a letter "E" shape in a cross section, it is possible to improve the elastic members holdability of the sheet members.

Further, in the case that the sheet members are formed in a cup shape by drawing a metal blank plate with dies, it is possible to make a formed side wall portion of the sheet members into the surface thereof contacting with the inner surfaces of the peripheral portions of the openings of the sub-plate and the disk plate. Consequently, if such is the case, it is possible to reduce the surface roughness of the surface of the sheet members contacting therewith. Thus, it is possible to further reduce the wear resulting from the surface roughness of the sheet members contacting with the inner surfaces of the peripheral portions of the openings of the sub-plate and the disk plate and developed thereon.

Thus, it is apparent from the summary of the present invention described above that the clutch disk according to the present invention provides the following advantageous effects:

Since the sheet members are brought into contact with the inner surfaces of the peripheral portions of the openings of the sub-plate and the disk plate in a fully increased area, it is possible to reduce the surface pressures per a unit contacting area exerted thereon, resulting from the centrifugal force and acting thereon by way of the sheet members, to remarkably lower magnitudes. In addition, since the sheet members are formed in a cup shape, and since the formed surface of the sheet members (i.e., the side wall portion thereof) can be made into the surface thereof contacting with the inner surfaces of the peripheral portions of the openings of the sub-plate and the disk plate. As a result, it is possible to reduce the surface roughness of the surface of the sheet members contacting therewith. Hence, it is possible to reduce the wear developed on the inner surfaces of the peripheral portions of the openings of the sub-plate and the disk plate and to improve the durability thereof.

## BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:

Figure 1 is a cross sectional view (taken along line A-A in Figure 2) of a clutch disk of a preferred embodiment according to the present invention;

Figure 2 is a partly cut-away front view of the clutch disk of the preferred embodiment according to the present invention;

Figure 3 is an enlarged perspective view of a torsion seat (i.e., a sheet member) of dampers of the clutch disk of the preferred embodiment according to the present invention;

Figure 4 is a partly cut-away front view of the clutch disk of the preferred embodiment according to the present invention, and illustrates the operation of the clutch disk;

Figure 5 is a partly enlarged front view of a conventional clutch disk; and

Figure 6 is an enlarged perspective view of a spring receiver of the conventional clutch disk.

## DETAILED DESCRIPTION OF THE PREFERRED EMBODIMENT

Having generally described the present invention, a further understanding can be obtained by reference to the specific preferred embodiment which is provided herein for purposes of illustration only and is not intended to limit the scope of the appended claims.

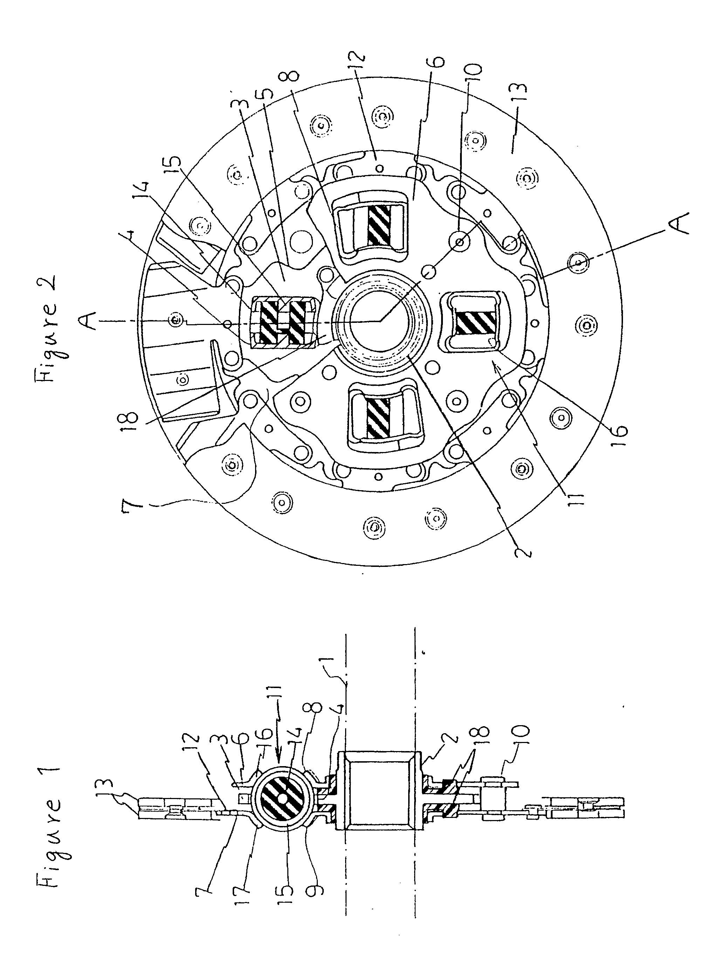

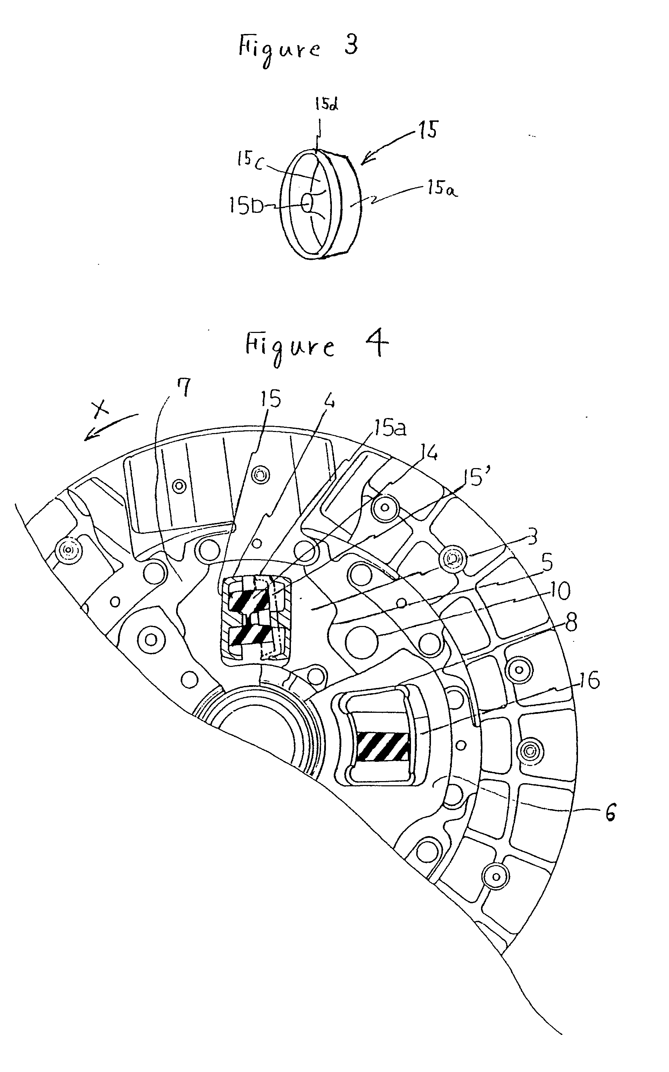

The clutch disk of the preferred embodiment according to the present invention will be hereinafter described with reference to Figures 1 through 4. In particular, Figure 1 is a lateral cross sectional view of the clutch disk, and Figure 2 is a partly cut-away front view of the clutch disk.

The clutch disk comprises a clutch hub 2, a sub-plate 6, a disk plate 7, a plurality of dampers 11, and a facing 13.

The clutch hub 2 includes a flange 3 formed on an outer periphery thereof. The flange 3 has a plurality of openings 4 and a plurality of cut-offs 5 working as stoppers. The clutch hub 2 engages with a rotary shaft 1 (illustrated with alternate long and one dash lines in Figure 1) with a spline.

The sub-plate 6 includes a plurality of openings 8 disposed at positions corresponding to the openings 4 of the flange 3 of the clutch hub 2 and defined by a peripheral portion 16 protruding in an axial direction in an arc shape in a cross section. The sub-plate 6 is disposed over one surface of the flange 3 of the clutch hub 2.

The disk plate 7 includes a plurality of openings 9 disposed at positions corresponding to the openings 4 of the flange 3 of the clutch hub 2 and defined by a peripheral portion 17 protruding in an axial direction in an arc shape in a cross section. The disk plate 7 is disposed over another surface of the flange 3 of the clutch hub 2 and connected to the sub-plate 6 by way of a plurality of stopper pins 10.

The dampers 11 are disposed in the openings 4 of the flange 3 of the clutch hub 2, the openings 8 of the sub-plate 6 and the openings 9 of the disk plate 7. The dampers 11 elastically connect the clutch hub 2, the sub-plate 6 and the disk plate 7.

The facing 13 is connected to the outer peripheral portion of the disk plate 7 by way of a cushion plate 12.

Additionally, a bushing 18 made of a resin is disposed between the flange 3 of the clutch hub 2, the sub-plate 6 and the disk plate 7.

One of the major features of the present invention lies in the dampers 11 which include an elastic member 14 and torsion sheets 15 disposed on both ends of the elastic member 14. The elastic member 14 is made of a rubber, and formed in a cylindrical shape having a concaved portion on both ends thereof. As described later, the concaved portions of the elastic members 14 engage with protrusion portions 15b of the sheet members 15. The torsion sheets 15 are made of a metal, and formed in a letter "E" shape in a cross section by drawing a metal blank plate with dies. The torsion sheets 15 are in surface-contact with the inner surfaces of the peripheral portions 16 of the openings 8 of the sub-plate 6 and the inner surfaces of the peripheral portions 17 of the openings 9 of the disk plate 7 so as to hold the dampers 11 in the openings 4, 8 and 9.

As illustrated in Figure 3, the torsion sheets 15 are formed in a cup shape having a letter "E" shape in a cross section. The torsion sheets 15 include a bottom portion 15c, a side wall portion 15a and a protrusion portion 15b protruding from the bottom portion 15c at a central portion thereof. The protrusion portion 15c is provided so as to inhibit the elastic members 14 from bending heavily and from coming off the sheet members 15.

Turning now to Figure 4, the operation of the clutch disk will be hereinafter described. Let us assume that the flange 3 of the clutch hub 2, the sub-plate 6 and the disk plate 7 rotate in the direction of the arrow "X" in Figure 4. When the stopper pins 10, connecting the sub-plate 6 and the disk plate 7 and disposed in the cut-offs 5, have contacted with the stopper cut-offs 5 of the flange 3 of the clutch hub 2, the sub-plate 6 and the disk plate 7 further rotate relatively with respect to the flange 3 of the clutch hub 2 in the direction of the arrow "X."

Under the situation illustrated in Figure 4, the right-hand side torsion sheet 15 of the damper 11 is pressed by the right-hand sides of the openings 8 and 9 of the sub-plate 6 and the disk plate 7, and rotated to a position 15' designated with alternate long and two dashes lines in Figure 4. On the other hand, the left-side torsion sheet 15 is held on the left-hand side of the opening 4 of the flange 3 of the clutch hub 2, and rotated relatively together with the flange 3 of the clutch hub 2. At this moment, the left-hand side torsion sheet 15 slides on the inner surfaces of the openings 8 and 9 of the sub-plate 6 and the disk plate 7 in a direction opposite to the arrow "X." Thus, the right-hand side torsion sheet 15 is rotated toward the left-hand side torsion sheet 15, thereby compressing and deforming the elastic member 4.

Namely, with regard to the movements of each of the torsion sheets 15, the flange 3 of the clutch hub 2, the sub-plate 6 and the disk plate 7, the right-hand side torsion sheet 15 rotates relatively with respect to the flange 3 of the clutch hub 2. Therefore, the right-hand side torsion sheet 15 slides on the inner surface of the opening 4 of the flange 3 of the clutch hub 2 in the direction of the arrow "X." On the other hand, the left-hand side torsion sheet 15 rotates relatively with respect to the sub-plate 6 and the disk plate 7. Therefore, the left-hand side torsion sheet 15 slides on the inner surfaces of the openings 8 and 9 of the sub-plate 6 and the disk plate 7 in the direction opposite to the arrow "X."

However, in the case that the sub-plate 6 and the disk plate 7 rotate relatively in the direction opposite to the arrow "X," the situation is the other way around. Namely, the left-hand side torsion sheet 15 is pressed by the left-hand sides of the openings 8 and 9 of the sub-plate 6 and the disk plate 7. Therefore, the left-hand side torsion sheet 15 slides on the inner surface of the opening 4 of the flange 3 of the clutch hub 2 in the direction opposite to the arrow "X," and the right-hand side torsion sheet 15 slides on the inner surfaces of the openings 8 and 9 of the sub-plate 6 and the disk plate 7 in the direction of the arrow "X."

In the clutch disk of the preferred embodiment according to the present invention, since the side wall portion 15a of the torsion sheets 15 is brought into contact with the inner surfaces of the protrusion portions 16 and 17 of the openings 8 and 9 of the sub-plate 6 and the disk plate 7 in a surface-contact manner in a fully increased contacting area, the surface pressures per a unit contacting area of the inner surfaces of the peripheral portions 16 and 17 can be reduced to remarkably lower magnitudes. As a result, it is possible to reduce the inner surfaces of the peripheral portions 16 and 17.

In addition, since the side wall portion 15a of the torsion sheets 15 is a formed surface, the surface roughness of the side wall portion 15a of the torsion sheets 15 can be reduced. Further, since the end surface 15d and edges of the torsion sheets 16 are inhibited from contacting with the inner surfaces of the peripheral portions 16 and 17, a heavy wear concentration is less likely to develop thereon. Consequently, it is possible to further reduce the wear developed on the inner surfaces of the peripheral portions 16 and 17 of the sub-plate 6 and the disk plate 7 and to improve the durability of the peripheral portions 16 and 17 thereof.

Having now fully described the present invention, it will be apparent to one of ordinary skill in the art that many changes and modifications can be made thereto without departing from the spirit or scope of the present invention as set forth herein including the appended claims.

Disclosed is a clutch disk comprising a clutch hub including a flange formed on an outer periphery thereof, the flange having a plurality of openings, a sub-plate including a plurality of openings disposed at positions corresponding to the openings of the flange of the clutch hub and defined by a peripheral portion, a disk plate including a plurality of openings disposed at positions corresponding to the openings of the flange of the clutch hub and defined by a peripheral portion, a plurality of dampers disposed in the openings of the flange of the clutch hub, the sub-plate and the disk plate, the dampers including an elastic member and sheet members disposed on both ends of the elastic member and having a cup shape, and a facing connected to the disk plate by way of a cushion plate. Since the clutch disk includes the dampers, the sheet members of the dampers are brought into contact with the inner surfaces of the peripheral portions of the sub-plate and the disk plate in a fully increased area, or the surface pressures per a unit contacting area exerted thereon by the sheet members are reduced remarkably. Hence, it is possible to sharply reduce wears developed on the inner surfaces of the peripheral portions of the sub-plate and the disk plate and to improve the durability of the peripheral portions thereof.

## Claims

1. A clutch disk comprising:

a clutch hub including a flange formed on an outer periphery thereof, said flange having a plurality of openings and a plurality of cut-offs working as stoppers, and said clutch hub engaging with a rotary shaft;

a sub-plate including a plurality of openings disposed at positions corresponding to said openings of said flange of said clutch hub and defined by a peripheral portion protruding in an axial direction in an arc shape in a cross section, and said sub-plate disposed over one surface of said flange of said clutch hub;

a disk plate including a plurality of openings disposed at positions corresponding to said openings of said flange of said clutch hub and defined by a peripheral portion protruding in an axial direction in an arc shape in a cross section, said disk plate disposed over another surface of said flange of said clutch hub and connected to said sub-plate by way of a plurality of stopper pins;

a plurality of dampers for elastically connecting said clutch hub, said sub-plate and said disk plate, said dampers disposed in said openings of said flange of said clutch hub, said openings of said sub-plate and said openings of said disk plate, said dampers including an elastic member and sheet members disposed on both ends of said elastic member, said sheet members having a cup shape so as to contact with inner surfaces of said peripheral portions of said openings of said sub-plate and inner surfaces of said peripheral portions of said openings of said disk plate in a surface-contact manner, thereby holding said dampers in said openings; and

a facing connected to an outer peripheral portion of said disk plate by way of a cushion plate.

2. The clutch disk according to claim 1, wherein said sheet members of said dampers have a letter "E" shape in a cross section, said letter "E" shape including a bottom portion, side wall portions and a protrusion portion disposed at a central portion thereof.

3. The clutch disk according to claim 2, wherein said elastic member of said dampers has a cylindrical shape having a concaved portion on both ends thereof, said concaved portion engaging with said protrusion portion of said sheet members.

4. The clutch disk according to claim 1, wherein said sheet members of said dampers are formed by drawing a metal blank plate with dies.

5. The clutch disk according to claim 4, wherein a formed side wall portion of said sheet members of said dampers contacts with said inner surfaces of said peripheral portions of said openings of said sub-plate and said inner surfaces of said peripheral portions of said openings of said disk plate in a surface-contact manner.

Figure 1

Figure 2

EP 0 445 737 A1

Figure 3

Figure 4

9

630

630 —

620  610  600  700

Figure 5
( Prior Art )

634  635

630  633

632

631

Figure 6
( Prior Art )

# EUROPEAN SEARCH REPORT

**European Patent Office**

Application Number

**EP 91 10 3320**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1 057 623 (FICHTEL & SACHS) <br> * Whole document * | 1-5 | F 16 D 13/68 |
| X | FR-A-1 213 399 (SAURER) <br> * Page 1; figure 1 * | 1,2,3 | |
| X | GB-A-5 370 49 (SAURER) <br> * Page 1, lines 31-45; page 2, lines 7-31; page 2, line 45 - page 3, line 33; fig. * | 1,5 | |
| A | US-A-3 811 545 (SATO) <br> * Whole document * | 1,2,3 | |
| A | GB-A-7 155 12 (LAYCOCK) <br> * Whole document * | 1 | |
| A | US-A-4 156 481 (ISHIDA) <br> * Whole document * | 1 | |

| TECHNICAL FIELDS SEARCHED (Int. Cl.5) |
|---|
| F 16 D |

The present search report has been drawn up for all claims

| Place of search | Date of completion of search | Examiner |
|---|---|---|
| The Hague | 04 June 91 | ORTHLIEB CH.E. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document